(19) Europäisches Patentamt
European Patent Office
Office européen des brevets

(11) EP 3 306 306 A1

(12) EUROPEAN PATENT APPLICATION
published in accordance with Art. 153(4) EPC

(43) Date of publication:
11.04.2018 Bulletin 2018/15

(51) Int Cl.:
G01N 21/64 (2006.01)          G06T 5/00 (2006.01)
G06T 7/00 (2017.01)          G06T 7/136 (2017.01)

(21) Application number: 16802780.3

(22) Date of filing: 25.05.2016

(86) International application number:
PCT/JP2016/002526

(87) International publication number:
WO 2016/194338 (08.12.2016 Gazette 2016/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 04.06.2015 JP 2015114005

(71) Applicant: Panasonic Corporation
Kadoma-shi, Osaka 571-8501 (JP)

(72) Inventor: SOFUE, Yasuyuki
Osaka 540-6207 (JP)

(74) Representative: Grünecker Patent- und
Rechtsanwälte
PartG mbB
Leopoldstraße 4
80802 München (DE)

(54) IMAGE PROCESSING METHOD AND IMAGE PROCESSING DEVICE

(57) An observation image containing a target bright spot is divided into an object region and a non-object region. A first image is obtained by replacing a brightness value of the non-object region with a predetermined brightness value. A second image is obtained by subjecting the first image to bright spot enhancement processing. The target bright spot is extracted from the second image. This image processing method can extract the target bright spot in the observation accurately.

FIG. 1

## Description

TECHNICAL FIELD

The present disclosure relates to an image processing method for extracting a detection target object in an observation image.

BACKGROUND ART

In food and medical fields, it is important to detect cells that are infected with pathogenic organisms and cells that have, e.g. predetermined proteins. For example, health conditions of plants and animals can be found by investigating, e.g. the infection rate of a pathogenic organism. In order to investigate the infection rate of the pathogenic organism, it is necessary to extract the number of cells in an observation image and the number of the pathogenic organisms in the cells.

The number of pathogenic organisms in cells is counted by an image analysis of a fluorescent observation image in which the pathogenic organisms are marked with a fluorescent dye. On the other hand, the number of cells is counted, for example, by an image analysis of a fluorescent observation image in which the cells are dyed with a fluorescent dye that is different from the fluorescent dye for marking the pathogenic organisms. In another method, the number of cells is counted by an image analysis of a bright-field observation image of the cells. The infection rate of pathogenic organism is calculated using the number of the counted pathogenic organisms and the number of the counted cells.

PTL 1 and PTL 2 are known as prior art documents relating to the present disclosure.

CITATION LIST

PATENT LITERATURE

PTL 1: Japanese Patent Laid-Open Publication No. 2013-57631
PTL 2: Japanese Patent Laid-Open Publication No. 2004-54956

SUMMARY

An observation image containing a target bright spot is divided into an object region and a non-object region. A first image is obtained by replacing a brightness value of the non-object region with a predetermined brightness value. A second image is obtained by subjecting the first image to bright spot enhancement processing. The target bright spot is extracted from the second image.

This image processing method can extract the target bright spot in the observation with high accuracy.

BRIEF DESCRIPTION OF DRAWINGS

FIG. 1 illustrates an observation image in an image processing method according to an exemplary embodiment.
FIG. 2 is a flow chart showing a flow of the image processing method according to the embodiment.
FIG. 3A illustrates an image in the image processing method according to the embodiment.
FIG. 3B illustrates an image in the image processing method according to the embodiment.
FIG. 3C illustrates an image in the image processing method according to the embodiment.
FIG. 3D illustrates an image in the image processing method according to the exemplary embodiment.
FIG. 3E illustrates an image in the image processing method according to the embodiment.
FIG. 4 is a block diagram of an image processing device according to the embodiment.

DETAIL DESCRIPTION OF PREFERRED EMBODIMENT

An image processing method according to an exemplary embodiment of the present disclosure will be described below with reference to drawings. The present disclosure is not limited to the following description and that various modifications may be made unless such modifications do not depart from the fundamental features described in the present description.

The image processing method according to the embodiment may be used for, for example, fluorescent observation images capturing therein samples and detection target objects contained in the samples.

The samples may be materials, such as cells and tissues, sampled from organisms. The cells may include red blood cells and IPS (induced pluripotent stem) cells. In addition, the detection target objects include parasites, such as malaria parasites, hemoplasma parasites, and Babesia parasites, viruses, proteins, cell nuclei, and foreign substances all of which exist inside the samples.

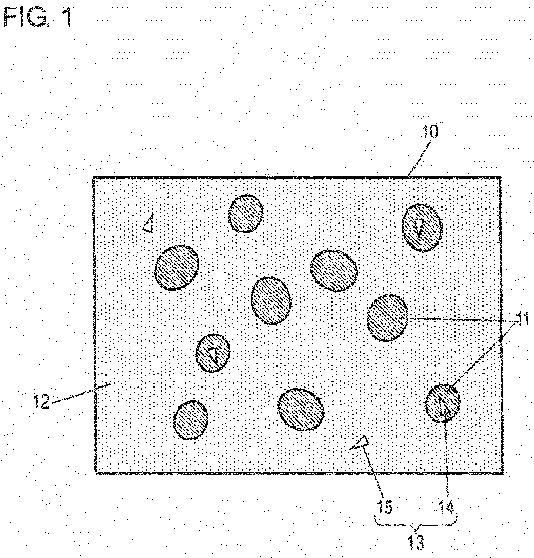

In accordance with the embodiment, an image processing method is described under the assumption that the samples are red blood cells, and the detection target objects are parasites existing inside the red blood cells. FIG. 1 shows observation image 10 used in the image processing method according to the embodiment.

The observation image 10 is, for example, a fluorescent observation image showing the samples and the detection target objects modified with a fluorescent dye. This image is captured with a fluorescence detection device.

The samples specifically bind to a fluorescent dye that emits fluorescence generated due to excitation light having a predetermined wavelength. The fluorescent dye includes, for example, an antigen that selectively binds to a protein that is unique to the sample. Thereby, the fluorescence detection device can capture an image of only the samples. Similarly, the detection target objects specifically bind to a fluorescent dye that emits fluorescence by excitation light with a predetermined wavelength. The wavelength of the excitation light that causes the fluorescent dye indicating the samples to emit fluorescence is preferably different from the wavelength of the excitation light that causes the fluorescent dye indicating the detection target objects to emit fluorescence. Thereby, the fluorescence detection device can capture an image of only the detection target objects. In this case, the fluorescence detection device includes an optical system that emits excitation lights with two wavelengths. The observation image 10 is photographed using the excitation lights with two wavelengths.

The observation image 10 is obtained by overlapping plural images captured with different excitation lights. One of the overlapping plural images may be a transparent observation image by using, e.g. a phase difference. The transparent observation image is, for example, an image capturing the samples therein.

The observation image 10 includes object regions 11 and a non-object region 12. The object regions 11 are regions in which red blood cells, which are the samples, exist. The non-object region 12 is the region of the observation image 10 that excludes the object regions 11.

The observation image 10 further contains bright spots 13 of fluorescence emitted from the fluorescent dye. The bright spots 13 include target bright spots 14 which indicate detection target objects, and non-target bright spots 15 which indicate non-targeted detection objects.

In accordance with the embodiment, parasites, the detection target objects, exist in the red blood cells. Accordingly, the target bright spots 14 are the bright spots 13 that exist inside the object regions 11. On the other hand, the non-target bright spots 15 are the bright spots 13 that exist inside the non-object region 12.

The image processing method according to the embodiment is performed in order to extract the target bright spots 14.

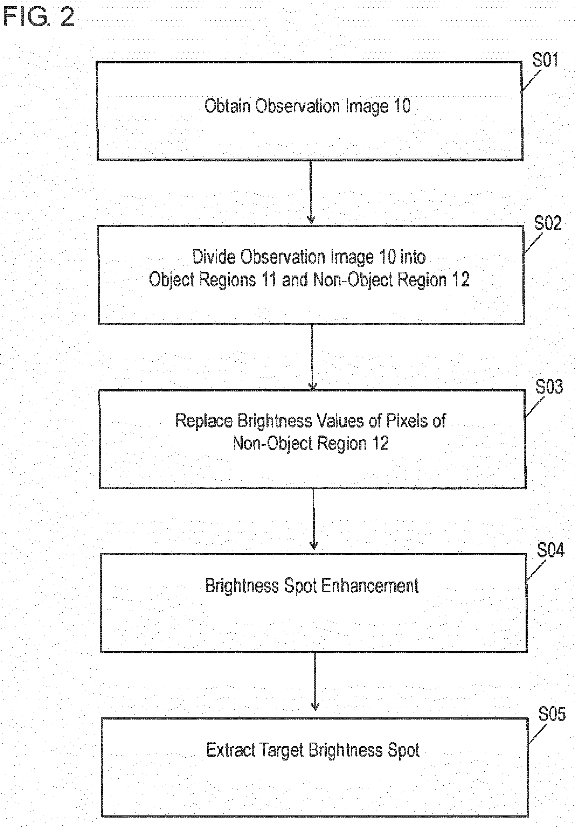

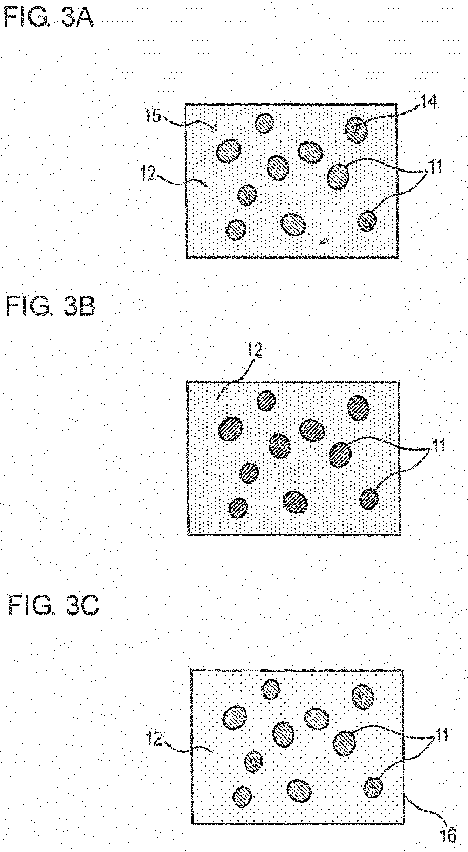

FIG. 2 is a flowchart of an image processing method according to the embodiment. FIGs. 3A to 3E show images in the image processing method according to the embodiment.

An observation image 10 to which image processing is performed is obtained (step S01). FIG. 3A shows the observation image 10 obtained in step S01.

Pixels of the observation image 10 have respective brightness values corresponding to the pixels. In the brightness values of the pixels of the observation image 10, for example, the brightness values of the pixels at the positions of the background are smaller than the brightness values of the pixels at the positions of the detection target objects while the brightness values of the pixels at the positions of the samples are smaller than the brightness values of the pixels at the positions of the background, and the brightness values of the pixels at the positions of the samples.

The order of the brightness values is dependent on the method for obtaining the observation image 10. The order of the brightness values to which the image processing method is applied is not specifically limited to any order.

Next, the region of the observation image 10 is divided into the object regions 11 and the non-object region 12 (step S02). FIG. 3B shows the observation image 10 obtained in step S02. The object regions 11 are regions in which the samples exist in the observation image 10. The region other than the object regions 11 is the object region 12. In other words, the non-object region 12 is the region in which the samples do not exist. The non-object region 12 is, for example, a background, such as a testing plate.

The separation of the object regions 11 and the non-object region 12 is performed using the brightness values in the observation image 10. The object regions 11 and the non-object region 12 are distinguished by binarizing the observation image 10 with respect to a brightness predetermined threshold value for brightness.

The brightness threshold value at which the object regions 11 and the non-object region 12 are separated may be within the range between the brightness value of the samples and the brightness value of the background. In this case, for example, it is determined that the pixels having brightness values smaller than the threshold value are contained in the object regions 11, and that the pixels having brightness values equal to or larger than the threshold value are contained in the non-object region 12.

The object regions 11 may be identified based on two threshold values: an upper limit value and a lower limit value. In this case, for example, it is determined that the pixels having brightness values equal to or greater than the lower limit value and less than the upper limit value are contained in object regions 11. It is determined that the pixels having brightness values equal to or greater than upper limit value or less than the lower limit value are contained in the non-object region 12. This configuration can identify the object regions 11 accurately.

The object regions 11 may be identified by additionally using a size threshold value for size. In this case, if one candidate region including plural pixels that have been determined to be contained in the object regions 11 has a size equal to or greater than a predetermined size threshold value for size, it is determined that the candidate region is the object region 11. If the candidate region has a size smaller than the size threshold value, it is determined that the candidate region is not the object region 11 but is contained in the non-object region 12. A region that is produced by a decrease in brightness due to random noise and has a size smaller than the size of the samples can be regarded as being in the non-object region 12. This avoids misjudgment of the object regions 11.

The size of the object region means the area of the object region. For example, the area is represented by the number of continuous pixels having brightness values equal to or greater than a predetermined value for brightness.

The brightness threshold value and the size threshold value used for separating the regions are previously determined according to the samples.

In the binarized image, a region defect may occur inside or on an outline of the region in which the sample exists. The region defect occurs when the sample or the fluorescent signal of the detection target object existing inside the sample becomes partially transparent and consequently shows the same level of brightness as the background. The region defect adversely affects extraction of target bright spots. For this reason, the image is corrected to fill the defective region. The defective region is corrected by subjecting the binarized image to morphological processing.

The morphological processing is a process for updating data of one pixel in the image referring to the pixels that surrounds the one pixel. Specifically, a pixel that has been determined to be in the non-object region 12 by binarization is converted so as to be determined to be in object region 11 when a predetermined number of pixels adjacent to that pixel belong to object regions 11.

Alternatively, as a method for preventing the region defect, a method of smoothing the entire image may be employed. Examples of the method of smoothing include gaussian masking and bilateral masking. Smoothing the image allows the brightness of the defective region inside a sample region to be close to the brightness of the portion surrounding that region, that is, the brightness of the region of the sample. As a result, the smoothing of the entire image suppresses the region defects.

The gaussian masking is a process for smoothing the brightness values of the entire image by using, for the brightness value of one pixel, the brightness value of that pixel and the brightness values of the surrounding pixels that are weighted by a gaussian distribution according to the distances from that pixel.

The bilateral masking is a process for smoothing the brightness values of the entire image by using, for the brightness value of one pixel, the brightness value of that pixel and the brightness values of the surrounding pixels that are weighted by a gaussian distribution taking the distances from that pixel and the differences in brightness value into account.

Before smoothing the image, all the bright spots including the fluorescent signals of the detection target objects existing inside the samples may be extracted previously using a predetermined threshold value. The extracted brightness values are replaced with a predetermined brightness value ranging between the brightness value of the background and the brightness threshold value used for separating the sample regions. This can eliminate the pixels that have prominently high brightness values. This configuration separates the object regions 11 from the non-object region 12 more accurately.

Next, the brightness values of pixels located in the non-object region 12 of the observation image 10 are replaced with a predetermined brightness value (step S03). FIG. 3C shows an image in which the brightness values of the non-object region 12 of the observation image 10 are replaced with a predetermined brightness value in step S03. The predetermined brightness value is, for example, the average brightness value of a partial region of the observation image 10, or the average brightness value of the entire observation image 10, or a brightness value calculated from those average values. The brightness value calculated from the average value is, for example, a value that is higher than the average value and lower than the target bright spot.

The brightness values of all the pixels in the non-object region 12 may be replaced with a predetermined brightness value. Alternatively, the brightness values of the pixels having higher brightness values than a predetermined brightness value may be replaced with the predetermined brightness value. In this case, the brightness values of the pixels having lower brightness values than the predetermined brightness value are maintained as is, and are not changed.

The non-target bright spots 15 that exist in the non-object region 12 are removed by the process of step S03.

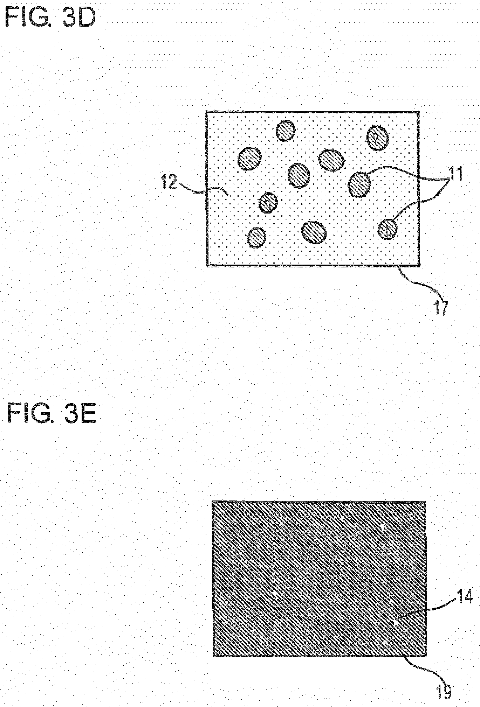

Next, the image 16 obtained by step S03 is subjected to bright spot enhancement processing (step S04). The bright spot enhancement processing allows weak fluorescence in the observation image 10 to become clearer so that the target bright spots 14 can be extracted easily. FIG. 3D shows image 17 that is subjected to the bright spot enhancement processing.

The bright spot enhancement processing is performed by, for example, an unsharp masking. The unsharp masking is used as a process for enhancing very weak fluorescent signal. The bright spot enhancement processing using the unsharp masking of the gaussian masking will be described below.

The unsharp masking is, for example, a process for replacing a brightness value L2 of a pixel in the image 17 for each of the pixels in the observation image 10 that is to be analyzed using a brightness value L1 of a pixel in the image 16, a brightness value Ga of the pixel in the image 16 that is smoothed by gaussian masking, and a weighting factor Ha by the following formula.

$$L2 = L1 + (L1 - Ha \times Ga)/(1 - Ha)$$

The operation of step S03 is necessary to execute the unsharp masking at an edge portion of the object region 11 in step S04. For example, in the case where the object regions 11 are cut away in step S02 while the pixels in the non-object region 12 do not have brightness values, the unsharp masking cannot be executed at the boundary between the object region 11 and the non-object region 12. However, in the image processing method according to the embodiment, the unsharp masking can be executed by performing the operation of assigning a predetermined brightness value to the non-object region 12.

The bright spot enhancement processing may be executed by a method that uses a band-pass filter based on Fourier transform or a maximum filter. The bright spot enhancement processing by a band-pass filter is performed by enhancing a high-frequency component often exhibited in the target bright spots 14 by performing Fourier transform. The bright spot enhancement processing by a maximum filter is performed by replacing the brightness values of the pixels in a predetermined range with the maximum brightness value of the pixels within the predetermined range.

Next, the target bright spots 14 that have been enhanced in the image 17 are extracted (step S05). As a result, the detection target objects in the observation image 10 can be detected. FIG. 3E shows image 19 obtained by the process in step S05.

The target bright spots 14 are detected using a brightness threshold value. The brightness threshold value is a value between the predetermined brightness value used in the replacement of the brightness values of the non-object region 12 in step S03 and the brightness value of the target bright spots 14. That is, the processor 22 determines that a pixel having a brightness value equal to or higher than the brightness threshold value is included in the target bright spot 14. It is determined that a pixel having a brightness value less lower the threshold value is not included in the target bright spot 14. The brightness value of the target bright spots 14 is, for example, the average value of the brightness values of the pixels indicating the detection target objects.

The target bright spots 14 may be detected by additionally using a size threshold value. In this case, if one candidate region including plural pixels that have been determined to be contained in the target bright spot 14 using the above-mentioned brightness value has a size that is equal to or smaller than the upper limit size threshold value and that is equal to or larger than the lower limit size threshold value, the processor 22 determines that the candidate region is the target bright spot 14. If the candidate region has an area larger than the upper limit threshold value, or if the candidate region has an area smaller than the lower limit threshold value, it is determined that the candidate region is not the target bright spot 14.

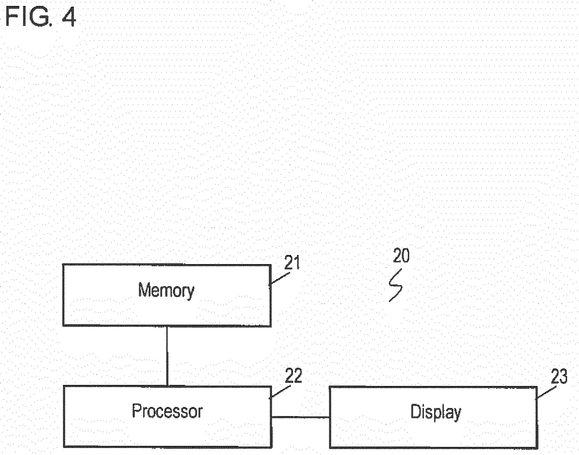

FIG. 4 is a block diagram of an image processing device 20 that performs the image processing method according to the embodiment.

The image processing device 20 includes a memory 21 that stores the observation image 10, and a processor 22 that performs the image processing method for the observation image 10.

The processor 22 is implemented by a CPU for executing a program of the image processing method. The program is stored in, for example, a memory of the processor 22. Alternatively, the program may be stored in, e.g. the memory 21 or an external storage device.

The image processing device 20 may further include a display 23 for displaying, e.g. the number of measured target bright spots 14, the number of samples, and the calculated infection rate. The display 23 is, for example, a display device.

The program of the image processing method may alternatively be executed by a personal computer.

In fluorescence observation, the fluorescent dye for marking a detection target object, such as a pathogenic organism, is also bound to a substance other than the detection target object. The fluorescence emitted by the fluorescent dye that is bound to a substance other than the detection target objects becomes noise on the observation image. Such noise may cause erroneous extraction of the detection target objects. Therefore, in order to extract the detection target objects accurately, it is necessary to distinguish whether a fluorescent spot indicating the detection target object exists in the object region, which means the inside of a cell, or in the non-object region, which means the outside of the cell.

The above-described conventional image processing methods hardly determines the position of a bright spot accurately. This means that the conventional methods cannot accurately extract the target bright spots, which indicate the detection target objects in the observation image.

The image processing method according to the embodiment can achieve both the process of separating the object region 11 and the non-object region 12 and removing the noise outside the object region and the process of unsharp masking, which has been difficult to achieve with conventional image processing methods. Therefore, the image processing method according to the embodiment can extract the target bright spots 14 in the observation image accurately and detect the detection target object accurately.

In accordance with the embodiment, the object regions 11 is the regions in which the samples exist to extract the target bright spots 14 indicating the detection target objects existing inside the samples, this is merely illustrative. The object regions 11 may be determined according to the regions in which the detection target objects exist. For example, a bright spot indicating a detection target object that exists outside the samples can be detected by setting the object regions 11 outside the samples. In addition, the observation image 10 is not necessarily the fluorescent observation image. The observation image 10 may be, for example, an observation image that does not contain fluorescence.

In the above description, the embodiment has been described as an example of the technology of the present disclosure. For that purpose, the appended drawings and the detailed description have been provided. Accordingly, the elements shown in the appended drawings and the detailed description may include not only the elements that are essential to solve the technical problem but also non-essential elements that are not necessary to solve the technical problem. Just because the appended drawings and the detailed description contain such non-essential elements, it should not be construed that such non-essential elements are necessary.

Since the foregoing embodiment merely illustrates the technology of the present disclosure, various modifications, substitutions, additions, and subtractions may be made within the scope of the claims and equivalents thereof.

INDUSTRIAL APPLICABILITY

An image processing method according to the present disclosure is useful particularly for processing observation images of, e.g. cells and tissues.

REFERENCE MARKS IN THE DRAWINGS

10   observation image
11   object region
12   non-object region
13   bright spot
14   target bright spot
15   non-target bright spot
16   image (first image)
17   image (second image)
20   image processing device
21   memory
22   processor
23   display

**Claims**

1. A method of processing an image, comprising:

    dividing an observation image containing a target bright spot into an object region and a non-object region!
    obtaining a first image by replacing a brightness value of the non-object region with a predetermined brightness value;
    obtaining a second image by subjecting the first image to bright spot enhancement processing; and
    extracting the target bright spot from the second image.

2. The method according to claim 1, wherein said dividing the observation image into the object region and the non-object region comprises dividing the observation image into the object region and the non-object region based on a threshold value for brightness and a threshold value for size.

3. The method according to claim 1, wherein said dividing the observation image into the object region and the non-object region comprises correcting an outline of the object region by a morphological processing.

4. The method according to claim 1, wherein said obtaining the second image comprises obtaining the second image by subjecting the first image to a process of bright spot enhancement by unsharp masking.

5. The method according to claim 1, wherein the predetermined brightness value is a value calculated based on an average brightness of the observation image.

6. The method according to claim 1, wherein said extracting the detection brightness spot comprises extracting the detection brightness spot by using a threshold value for brightness and a threshold value for size.

7. An image processing device comprising:

    a memory storing an observation image containing a target bright spot; and
    a processor configured to

        divide a region in the observation image into an object region and a non-object region,
        obtain a first image by replacing a brightness value of the non-object region with a predetermined brightness value,
        obtain a second image by subjecting the first image to bright spot enhancement processing, and
        extract the target bright spot from the second image.

FIG. 1

FIG. 2

Obtain Observation Image 10 — S01

Divide Observation Image 10 into
Object Regions 11 and Non-Object Region 12 — S02

Replace Brightness Values of Pixels of
Non-Object Region 12 — S03

Brightness Spot Enhancement — S04

Extract Target Brightness Spot — S05

FIG. 3A

FIG. 3B

FIG. 3C

FIG. 3D

FIG. 3E

FIG. 4

## INTERNATIONAL SEARCH REPORT

| International application No. |
| --- |
| PCT/JP2016/002526 |

| A. CLASSIFICATION OF SUBJECT MATTER |
| --- |
| *G06T1/00*(2006.01)i, *G01N21/64*(2006.01)i |

According to International Patent Classification (IPC) or to both national classification and IPC

| B. FIELDS SEARCHED |
| --- |
| Minimum documentation searched (classification system followed by classification symbols) |
| G06T1/00, G01N21/64 |

| Documentation searched other than minimum documentation to the extent that such documents are included in the fields searched |
| --- |
| Jitsuyo Shinan Koho          1922-1996   Jitsuyo Shinan Toroku Koho    1996-2016 |
| Kokai Jitsuyo Shinan Koho    1971-2016   Toroku Jitsuyo Shinan Koho    1994-2016 |

| Electronic data base consulted during the international search (name of data base and, where practicable, search terms used) |
| --- |

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2009-009290 A  (KDDI Corp.),<br>15 January 2009 (15.01.2009),<br>paragraphs [0016] to [0021]<br>(Family: none) | 1-7 |
| Y | WO 2008/099580 A1  (NEC Corp.),<br>21 August 2008 (21.08.2008),<br>paragraphs [0015] to [0019]<br>& US 2010/0098317 A1<br>paragraphs [0030] to [0034] | 1-7 |
| Y | JP 2010-102507 A  (Fujifilm Corp.),<br>06 May 2010 (06.05.2010),<br>paragraph [0086]<br>(Family: none) | 1-7 |

| ☒ | Further documents are listed in the continuation of Box C. | ☐ | See patent family annex. |
| --- | --- | --- | --- |

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 June 2016 (29.06.16) | 12 July 2016 (12.07.16) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2016/002526

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-057631 A  (Konica Minolta Medical & Graphic, Inc.), 28 March 2013 (28.03.2013), paragraphs [0070] to [0074] (Family: none) | 2-3 |
| Y | JP 2013-235517 A  (Sharp Corp.), 21 November 2013 (21.11.2013), paragraph [0069] (Family: none) | 4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013057631 A

- JP 2004054956 A